# EUROPÄISCHE PATENTSCHRIFT

(11) **EP 4 462 304 B1**
(45) Veröffentlichungstag und Bekanntmachung des Hinweises auf die Patenterteilung: **02.04.2025**
(21) Anmeldenummer: 23172289.3
(22) Anmeldetag: 09.05.2023
(51) Int. Cl.: G06K 7/10, H04B 17/12, H04B 17/26

(54) **PRÜFEN UND ANPASSEN EINER RFID-LESEVORRICHTUNG**
TESTING AND CUSTOMIZING AN RFID READER
TEST ET RÉGLAGE D'UN DISPOSITIF DE LECTURE RFID

(43) Veröffentlichungstag der Anmeldung: 13.11.2024
(73) Patentinhaber: SICK AG, 79183 Waldkirch (DE)
(72) Erfinder: Pudenz, Florian, 22359 Hamburg (DE)

(56) Entgegenhaltungen:
- US-A1- 2009 022 066
- US-A1- 2013 215 876
- US-A1- 2013 322 562

## Beschreibung

Die Erfindung betrifft ein Verfahren zum Prüfen und Anpassen einer RFID-Lesevorrichtung nach dem Oberbegriff von Anspruch 1 und eine entsprechende RFID-Lesevorrichtung nach Anspruch 15.

RFID-Lesevorrichtungen oder kurz RFID-Reader beziehungsweise RFID-Leser dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Dies führt zu schnellen und nachvollziehbaren Logistikbewegungen. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

Eine RFID-Lesevorrichtung regt über ihre Antenne durch elektromagnetische Strahlung in ihrem Lesebereich befindliche RFID-Transponder zur Abstrahlung der gespeicherten Information an, empfängt die entsprechenden Transpondersignale und wertet sie aus. Dazu wird häufig der UHF-Frequenzbereich (Ultrahochfrequenz) verwendet, da es hier in dem Standard ISO 18000-6 einen etablierten Rahmen gibt und zudem Transponder in unterschiedlichen Entfernungen von einigen Millimetern bis hin zu mehreren Metern ausgelesen werden können. UHF-RFID-Transponder sind in sehr kompakten Bauformen verfügbar und können dementsprechend auch an sehr kleinen Objekten angebracht werden.

Die RFID-Lesevorrichtung verwendet eine interne oder externe Antenne, wobei eine externe Antenne in der Regel nachträglich mit einer Verbindungsleitung angeschlossen wird. Die Wahl der passenden Antenne für eine bestimmte Anwendungssituation ist von großer Bedeutung. Je nach Umgebung, Einbausituation, maximal möglicher Sendeleistung sowie Art und Ausrichtung der verwendeten RFID-Transponder kommt es ansonsten womöglich zu großen Signaldämpfungen, die eine Kommunikation zwischen RFID-Lesevorrichtung und Transponder beeinträchtigen oder komplett verhindern. Es ist somit viel Fachwissen auf Seiten des Benutzers erforderlich, damit die RFID-Lesevorrichtung optimal arbeitet.

Die DE 103 53 613 A1 offenbart eine Vorrichtung zum Einstellen und zur Steuerung einer RFID-Antenne, die ihre Antennencharakteristik misst und erforderlichenfalls anpasst.

In der EP 2 442 255 A1 wird ein RFID-Leser beschrieben, dessen Antenne einen Datenträger aufweist, in dem für eine erleichterte Installation die Antennenparameter abgelegt sind, wobei der Datenträger insbesondere ein RFID-Transponder ist. In dem Datenträger kann auch lediglich eine Identifikationsinformation der Antenne abgelegt sein, aus der dann mittels einer Tabelle des RFID-Lesers oder eines übergeordneten Systems die Antennenparameter bestimmt werden.

Aus EP 2 712 021 A1 ist eine Antenne für ein Schreib-/Lesegerät für RFID-Anordnungen bekannt. Die Antenne ist mit einem Datenspeicher mit Typinformationen und/oder Eigenschaftsinformationen ausgestattet und weist ferner eine Messeinrichtung zur Bestimmung mindestens eines Wertes der Feldstärke oder Leistung eines in die Antenne eingespeisten Hochfrequenzsignals auf.

Die US 10 181 656 B2 befasst sich mit einer Antenneneinheit, die eine Antenne und einen Koaxialverbinder aufweist. Der Koaxialverbinder weist einen internen Speicher auf, der es ermöglicht, die angeschlossene Antenne zu identifizieren und der über das Koaxialkabel versorgt wird.

Die US 2008/0129509 A1 befasst sich mit einem RFID-System, in dem eine Antenne einer Antennenanordnung anhand einer Information identifiziert wird, die in einem RFID-Tag der Antennenanordnung gespeichert ist.

In allen diesen Fällen sind mögliche Anpassungen der Antenneneigenschaften nur innerhalb des Rahmens möglich, den die vorhandene Antenne setzt.

Die US 2013/0215876 A1 (D1) offenbart ein Verfahren zum Verwalten von Antennen an Zugriffspunkten eines WLANs. Es werden Informationen über eine angeschlossene Antenne erfasst, beispielsweise aus einem RFID-Chip der Antenne mittels RFID-Leser, und mit Informationen geeigneter Antennen einer Datenbank verglichen. Je nach Ergebnis des Vergleichs wird die Antenne angeschlossen oder getrennt.

Die US 2013/0322562 A1 (D2) befasst sich mit der Antennenanpassung in einem Mobilfunknetz. Es wird geprüft, ob eine Fehlanpassung zwischen einer ersten und zweiten Antenne vorliegt, und es wird versucht, dies durch Anpassung zu reduzieren. Anschließend wird eine der beiden Antennen zum Senden und/oder empfangen ausgewählt.

Die US 10 339 346 B2 offenbart eine rekonfigurierbare Antenne eines RFID-Lesers, in der zwischen verschiedenen Antennenzuständen umgeschaltet werden kann, um Eigenschaften wie die Polarisation, das Frequenzband oder die Richtcharakterisik im Nahund Fernfeld anzupassen. Dafür sind allerdings mehrere angeschlossene Antennen erforderlich, zwischen denen durch die Umschaltung gewechselt wird.

Es ist daher Aufgabe der Erfindung, die Kommunikation einer RFID-Lesevorrichtung mit RFID-Transpondern weiter zu verbessern.

Diese Aufgabe wird durch ein Verfahren zum Prüfen und Anpassen einer RFID-Lesevorrichtung nach Anspruch 1 und eine RFID-Lesevorrichtung nach Anspruch 15 gelöst. Das Verfahren ist ein computerimplementiertes Verfahren, das beispielsweise in einer Recheneinheit der RFID-Lesevorrichtung und/oder einer angeschlossenen Recheneinheit abläuft. Über ihre Antenne tauscht die RFID-Lesevorrichtung mindestens ein RFID-Signal mit mindestens einem RFID-Transponder aus. Eine RFID-Lesevorrichtung ist trotz des verkürzten Namens meist auch zum Schreiben von Daten auf einen RFID-Transponder in der Lage. Die RFID-Lesevorrichtung erkennt, welche Antenne angeschlossen ist, wobei dies je nach noch vorzustellender Ausführungsform eine Vorgabe sein kann, wie ein von einem Benutzer gesetzter Parameter, oder eine automatische Identifikation der Antenne durch die RFID-Lesevorrichtung.

Die Erfindung geht von dem Grundgedanken aus, dass die RFID-Lesevorrichtung einerseits wie erläutert über das Wissen verfügt, welche Antenne angeschlossen ist, und andererseits Zugriff auf eine Antennenliste hat, in der steht, welche alternativen Antennen verfügbar wären. Dabei bezeichnet Antennenliste eine Sammlung von Daten mit Antennen in einem beliebigen Datenformat. Es wird dann die vorhandene Antenne mit den alternativen Antennen verglichen, ob durch einen Austausch vermutlich eine verbesserte Übertragung des RFID-Signals erreicht wird. Eine aus der Antennenliste ausgewählte Antenne, die zu einer Verbesserung führt, wird als identifizierte Antenne bezeichnet. Dabei bezieht sich Verbesserung auf mindestens einen Parameter der Übertragung mit dem Ziel, RFID-Informationen verbessert, also beispielsweise robuster, mit höherer Leserate oder auch über eine größere Reichweite, zwischen RFID-Lesevorrichtung und RFID-Transponder auszutauschen. Eine alternative Antenne mit einer so verstandenen Verbesserung wird dann dem Benutzer der RFID-Lesevorrichtung vorgeschlagen und dafür am Gerät oder an anderer Stelle angezeigt. Das alles kann sich auf eine interne Antenne beziehen, sofern deren Austausch beispielsweise durch modularen Aufbau der RFID-Lesevorrichtung vorgesehen und vorzugsweise einfach möglich ist, oder auf eine externe Antenne, wobei dann deren Verbindungsleitung in den Vorschlag für einen Austausch einbezogen sein kann, oder auf beides, sofern zusätzlich zu einer internen Antenne eine Anschlussmöglichkeit für eine externe Antenne vorgesehen ist.

Die Erfindung hat den Vorteil, dass die Kommunikation zwischen der RFID-Lesevorrichtung und den davon zu lesenden RFID-Transpondern nach Austausch zu einer empfohlenen Antenne und/oder Verbindungsleitung verbessert und damit die gestellte Aufgabe gelöst ist. Die Vorschläge erfordern keine besondere Einarbeitung oder Fachwissen über RFID, Antennen oder die Anwendungssituation. Die Signalqualität erhöht sich, und damit wird letztlich die Identifikation von RFID-Transpondern und somit der damit markierten Objekte erleichtert und verbessert.

Die Antennenliste weist bevorzugt Einträge für eine Antenne oder Verbindungsleitung mit zugehörigen Antennenparametern oder Übertragungsparametern auf, insbesondere eine Dämpfung, einen Antennengewinn, ein Achsenverhältnis oder einen Frequenzbereich. Die alternativen Antennen beziehungsweise Verbindungsleitungen sind so mit Eigenschaften verknüpft, anhand derer entschieden werden kann, ob damit eine Verbesserung möglich ist oder nicht. Die Antennenliste samt der zugehörigen Antennen- oder Übertragungsparameter ist vorzugsweise in einem einheitlichen Datenformat zusammengefasst. Alternativ können die zugehörigen Parameter in einem zweiten Schritt anhand der Identität der Antenne abgeleitet werden, beispielsweise durch eine Datenbankabfrage.

Es wird mindestens ein Signalparameter des übertragenen RFID-Signals gemessen. Auf diese Weise kann die RFID-Lesevorrichtung Informationen darüber gewinnen, wie gut die Anpassung an die vorhandene Anwendungssituation mit der angeschlossenen Antenne realisiert ist. Das dient als Basis für den Vergleich mit alternativen Antennen und mögliche Verbesserungen durch einen Austausch der angeschlossenen durch eine alternative Antenne. Die Messungen können während des Betriebs, aber auch während einer Konfigurations- oder Einlernphase stattfinden. Vorzugsweise wird während einer Vielzahl von Lese- und/oder Schreibvorgängen mit demselben oder noch bevorzugter mit mehreren RFID-Transpondern gemessen, um die Anwendung und die Anpassung daran möglichst repräsentativ bewerten zu können.

Der gemessene Signalparameter wird bevorzugt mit einer Mindestanforderung verglichen. Diese Mindestanforderung kann fest vorgegeben sein, etwa durch Benutzereingabe oder Spezifikation der RFID-Lesevorrichtung. Eine weitere Möglichkeit besteht darin, die Mindestanforderung aus solchen Vorgaben abzuleiten, beispielsweise in der RFID-Lesevorrichtung anhand eines Modells oder sonstiger Rechenvorschriften zu bestimmen, welche Signalstärke für eine vorgegebene Reichweite erforderlich ist. Insbesondere wird dann die identifizierte Antenne und/oder Verbindungsleitung angezeigt, wenn der gemessene Signalparameter die Mindestanforderung nicht erfüllt. Der Verbesserungsvorschlag der RFID-Lesevorrichtung ist damit an die Bedingung der Mindestanforderung geknüpft.

Der gemessene Signalparameter weist bevorzugt eine Signalstärke auf, wobei insbesondere die identifizierte Antenne einen anderen Antennengewinn (Gain) und/oder die Verbindungsleitung eine andere Dämpfung aufweist. Die Signalstärke ist ein für die RFID-Kommunikation häufig besonders wichtiger Parameter der Übertragung, weil davon die Robustheit und Reichweite besonders stark abhängen. Bevorzugt wird also die vorgeschlagene alternative Antenne beziehungsweise Verbindungsleitung eine höhere Signalstärke erzielen, etwa durch höheren Antennengewinn oder geringere Dämpfung. Der Begriff "andere" bezieht sich jeweils auf das Verhältnis zwischen der angeschlossenen oder vorhandenen und der vorgeschlagenen oder für einen Austausch vorgesehenen alternativen Antenne.

Die identifizierte Antenne und/oder Verbindungsleitung führt vorzugsweise zu einer gemäß rechtlicher Vorgaben zulässigen, insbesondere gerade noch zulässigen Signalstärke. Eine zum Austausch vorgeschlagene Antenne beziehungsweise Verbindungsleitung erfüllt damit einen normierten Rahmen und schöpft diesen andererseits nach Möglichkeit voll aus. Das kann als Randbedingung verstanden werden, dass kein Vorschlag für eine Antenne gegen Normvorgaben verstößt, aber auch eine Verbesserung in dem Sinne sein, dass die bisher angeschlossene Antenne die rechtlichen Vorgaben verletzen würde. In diesem Fall ist eine geringere Signalstärke als zuvor eine Verbesserung, weil zwar aus technischer Sicht nichts gewonnen und im Gegenteil sogar ein gewisser Verlust hinzunehmen ist, die RFID-Lesevorrichtung aber sonst gar nicht betrieben werden dürfte.

Vorzugsweise wird das Zeitverhalten der Signalstärke auf Schwankungen geprüft, und insbesondere weist im Falle von Schwankungen über ein vorgegebenes Mindestmaß hinaus die identifizierte Antenne ein anderes Achsenverhältnis oder eine andere Polarisation auf. Starke Schwankungen in der Signalstärke werden hier darauf zurückgeführt, dass die RFID-Transponder unterschiedliche Ausrichtungen aufweisen und die angeschlossene Antenne nur auf einen Teil dieser Ausrichtungen passt. In diesem Fall kann es vorteilhaft sein, auf eine Antenne mit einem geringeren Achsenverhältnis beziehungsweise einer anderen Polarisation überzugehen, also anschaulich die Ausrichtung und Exzentrizität einer elliptischen Richtcharakteristik anzupassen und weiterdenkend beispielsweise von einer linear polarisierten Antenne zu einer zirkular polarisierten Antenne zu wechseln. Die als Mindestmaß bezeichnete, an die Schwankungen angelegte Schwelle kann als eine der oben schon angeführten Mindestanforderungen aufgefasst werden.

Der gemessene Signalparameter weist bevorzugt eine Frequenz oder eine Phase des RFID-Signals auf. Damit sind beispielhaft einige weitere Signalparameter genannt, auf die durch Austausch mit einer Antenne passender Antennenparameter reagiert werden kann. Einige mögliche Antennenparameter sind: Polarisation, Strahlungswiderstand, Impedanz, Wirkungsgrad, Richtfaktor, Antennengewinn (Gain), Absorptions- oder Wirkfläche oder Bandbreite.

Vorzugsweise wird die angeschlossene Antenne automatisch erkannt. Dazu kann mit einem internen oder angeschlossenen optischen Codeleser ein Code an der Antenne einschließlich deren Verbindungsleitung erkannt werden. Eine weitere Möglichkeit ist das Auslesen eines Speichers der Antenne, wobei der Datenaustausch über die Verbindungsleitung oder drahtlos erfolgen kann. Der Speicher kann insbesondere als RFID-Transponder realisiert sein, mit dem die RFID-Lesevorrichtung über RFID-Signale kommuniziert. Als Alternative zu einer automatischen Erkennung ist eine Parametrierung oder Benutzervorgabe denkbar.

Die Antennenliste ist vorzugsweise in der RFID-Lesevorrichtung gespeichert. Dadurch hat die RFID-Lesevorrichtung sofort Zugriff. Denkbar ist zusätzlich oder alternativ, dass die RFID-Lesevorrichtung Zugriff auf eine externe Datenbank mit der Antennenliste hat. Die externe Datenbank ist beispielsweise in einer übergeordneten Steuerung, einem Netzwerk oder einer Cloud implementiert.

Die identifizierte Antenne und/oder Verbindungsleitung wird vorzugsweise auf einer Anzeige der RFID-Lesevorrichtung oder einem daran angeschlossenen Gerät angezeigt. Die Anzeige kann damit im Prinzip an denselben Stellen vorgesehen sein wie die Antennenliste, also direkt an der RFID-Lesevorrichtung selbst oder an einem vor Ort oder auch Remote angeschlossenen anderen Gerät.

In bevorzugter Weiterbildung weist eine RFID-Lesevorrichtung eine interne Antenne und/oder eine über eine Verbindungsleitung angeschlossene externe Antenne, einen mit der Antenne verbundenen Transceiver zum Übertragen mindestens eines RFID-Signals zwischen der RFID-Lesevorrichtung und mindestens einem RFID-Transponder sowie eine mit dem Transceiver verbundene Steuer- und Auswertungseinheit auf, in der ein erfindungsgemäßes Verfahren zum Prüfen und Anpassen der RFID-Lesevorrichtung implementiert ist. Die Antenne wird von der RFID-Lesevorrichtung zum Senden von RFID-Signalen an einen RFID-Transponder und/oder zum Empfangen von RFID-Signalen von einem RFID-Transponder verwendet. Als Transceiver wird hier jede Kombination eines Senders und Empfängers bezeichnet. Die Steuer- und Auswertungseinheit, die mindestens einen digitalen Rechenbaustein aufweist, wie einen Mikroprozessor, ein FPGA (Field Programmable Gate Array), einen ASIC (Application Specific Integrated Circuit) oder dergleichen, ist für das Eincodieren einer RFID-Information in die RFID-Signale und/oder zum Auslesen einer RFID-Information aus den RFID-Signalen ausgebildet. Transceiver und Steuer- und Auswertungseinheit können einen gemeinsamen Rechenbaustein bilden oder jedenfalls teilweise einen Rechenbaustein gemeinsam nutzen. Eine solche RFID-Lesevorrichtung wird bevorzugt in stationärer Montage an einem Lesebereich eines Förderers oder eines Leseportals zum Auslesen mindestens eines auf dem Förderer oder durch das Leseportal bewegten RFID-Transponders eingesetzt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer RFID-Lesevorrichtung mit interner Antenne;
- Fig. 2: eine schematische Darstellung einer RFID-Lesevorrichtung mit externer Antenne;
- Fig. 3: eine schematische Übersichtsdarstellung einer RFID-Lesevorrichtung mit Zugriff auf eine Antennenliste mit alternativ anschließbaren Antennen;
- Fig. 4: ein beispielhaftes allgemeines Ablaufdiagramm zur Erläuterung der Anpassung der RFID-Lesevorrichtung durch Empfehlung einer anderen Antenne mit verbesserten Eigenschaften; und
- Fig. 5: ein Ablaufdiagramm ähnlich Figur 4 nun mit konkreteren Bedingungen und Empfehlungen eines Ausführungsbeispiels.

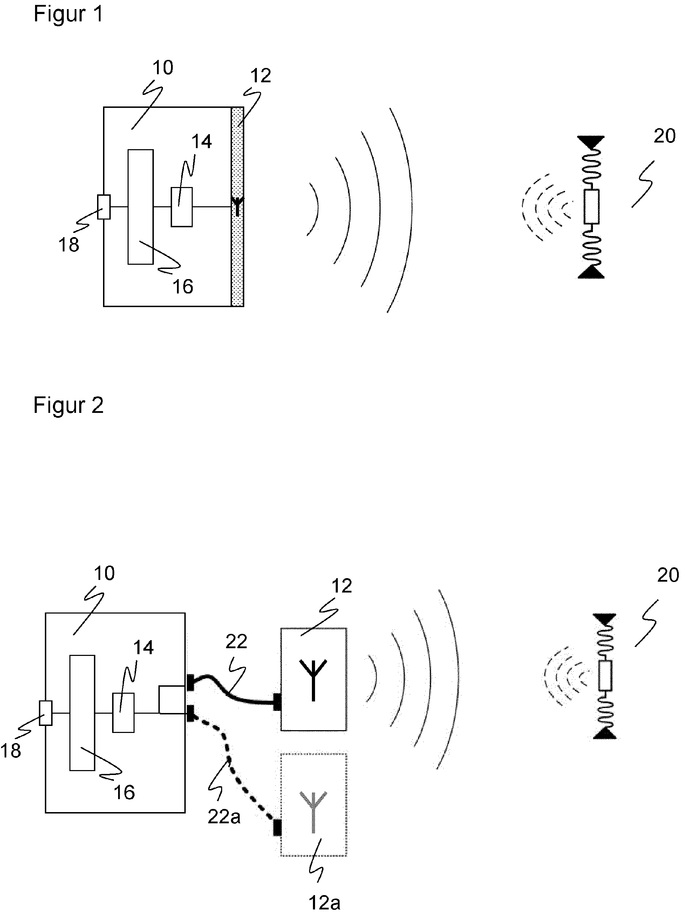

Figur 1 zeigt eine schematische Darstellung einer RFID-Lesevorrichtung 10 mit einer Antenne 12, die hier als interne Antenne vorgesehen ist. Die Antenne 12 ist beispielsweise für das ISM-Band bei etwa 900 MHz ausgelegt. An die Antenne 12 ist ein Transceiver 14 und daran eine Steuer- und Auswertungseinheit 16 der RFID-Lesevorrichtung 10 angeschlossen. Die Steuer- und Auswertungseinheit 16 ist weiterhin mit einer drahtgebundenen oder drahtlosen Schnittstelle 18 verbunden, um Daten auszutauschen, Parametrierungen vorzunehmen und dergleichen. Mittels der Antenne 12 werden von der Steuer- und Auswertungseinheit 16 Informationen als RFID-Signale an einen RFID-Transponder 20 gesendet beziehungsweise von dem RFID-Transponder 20 empfangene RFID-Signale ausgewertet. Die grundsätzliche Funktionsweise einer RFID-Lesevorrichtung beispielsweise für den UHF-Frequenzbereich (Ultrahochfrequenz) nach dem Standard ISO 18000-6 ist an sich bekannt und wird deshalb nicht näher erläutert.

Figur 2 zeigt eine schematische Darstellung einer weiteren Ausführungsform einer RFID-Lesevorrichtung 10 nun mit einer Antenne 12, die extern über eine Verbindungsleitung 22 angeschlossen ist. Durch eine weitere extern über eine Verbindungsleitung 22a angeschlossene Antenne 12a soll angedeutet werden, dass eine RFID-Lesevorrichtung 10 über mehrere Antennen kommunizieren kann, sei es parallel oder durch Umschalten auf eine jeweilige aktive Antenne, wobei die Anzahl nicht auf zwei Antennen festgelegt und auch eine Kombination von internen und externen Antennen möglich ist.

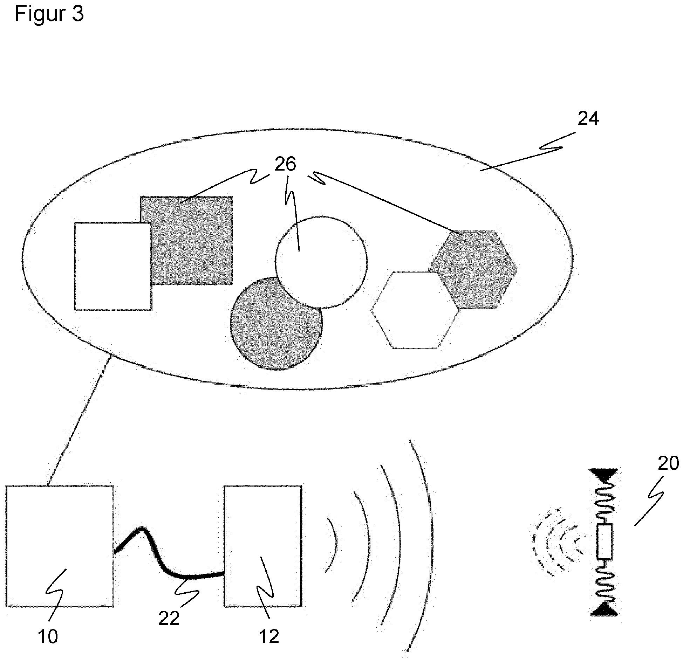

Figur 3 zeigt eine schematische Übersichtsdarstellung einer RFID-Lesevorrichtung 10 mit Zugriff auf einen Katalog oder eine Antennenliste 24 mit alternativen Antennen 26. Zugriff bedeutet, dass die Antennenliste 24 in der RFID-Lesevorrichtung 10 gespeichert ist, die RFID-Lesevorrichtung 10 über ihre Schnittstelle 18 darauf zugreifen kann oder beides. Die alternativen Antennen 26 können statt einer externen Antenne 12, 12a, je nach Aufbau der RFID-Lesevorrichtung 10 auch statt einer internen Antenne 12 an die RFID-Lesevorrichtung 10 angeschlossen werden. Die Antennenliste 24 kann ein beliebiges Datenformat aufweisen, wobei für jede alternative Antenne 26 zumindest eine Identifikationsinformation vorliegt, an der sie erkannt wird. Weitere Eigenschaften, wie Antennenparameter, Baugröße, Anschlussart, zulässige Länder, ein Bild, ein Datenblatt, Bestellinformationen und dergleichen, können direkt zu der Identifikationsnummer in der Antennenliste 24 gespeichert sein, oder sie werden anhand der Identifikationsnummer aus einer lokalen oder auch im Internet oder einer Cloud verfügbaren Datenbank abgefragt.

Einfluss auf die Antenneneigenschaften hat auch die Verbindungsleitung 22, so dass hierfür ebenfalls Einträge in der Antennenliste 24 vorgesehen sein können, einschließlich Eigenschaften der Verbindungsleitung 22 wie beispielsweise deren Länge oder Dämpfungsverhalten. Es ist somit denkbar, dass beim Austausch der Antenne 12 gegen eine alternative Antenne 26 auch oder sogar ausschließlich die Verbindungsleitung 22 ausgetauscht wird. Das wird an einigen Stellen sprachlich nicht unterschieden.

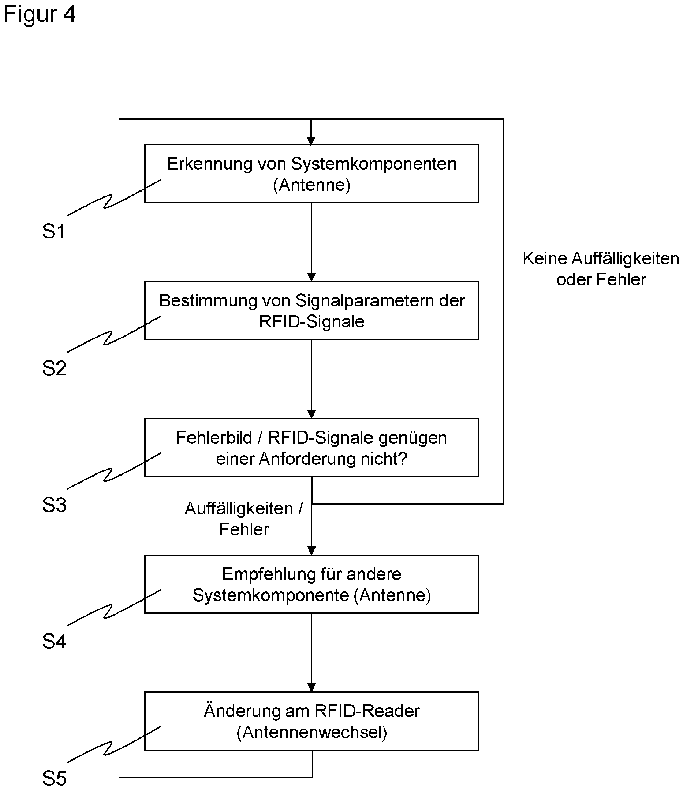

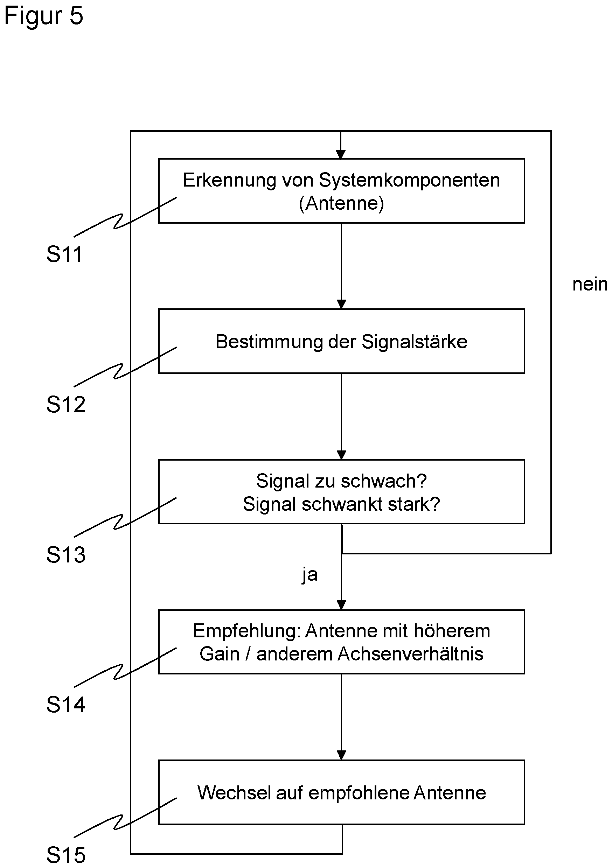

Der Zweck der Antennenliste 24 ist, dem Benutzer die Einrichtung, Verbesserung oder Anpassung einer Anwendung mit der RFID-Lesevorrichtung 10 zu erleichtern. Dafür soll die RFID-Lesevorrichtung 10 dem Benutzer eine Empfehlung geben, wenn sich auf der Antennenliste 24 eine alternative Antenne 26 befindet, mit der die RFID-Kommunikation gegenüber der vorhandenen Antenne 12 verbessert würde oder eine angestrebte Spezifikation der Anwendung, etwa hinsichtlich Reichweite, Leserate oder Signalqualität, überhaupt erst erreicht werden könnte. Ein entsprechendes Verfahren zur automatischen Empfehlung einer alternativen Antenne 26 wird nun zunächst unter Bezugnahme auf die Figur 4 in allgemeiner Form und dann unter Bezugnahme auf die Figur 5 in einer besonders vorteilhaften spezielleren Ausführungsform erläutert.

Figur 4 zeigt ein beispielhaftes allgemeines Ablaufdiagramm zur Erläuterung der Anpassung der RFID-Lesevorrichtung 10 durch Empfehlung einer alternativen Antenne 26 aus der Antennenliste 24, mit der sich eine RFID-Lesevorrichtung 10 mit für deren Anwendung verbesserten Eigenschaften ergibt.

In einem Schritt S1 erkennt die RFID-Lesevorrichtung 10, welche Antenne 12 angeschlossen ist. Es sei daran erinnert, dass der Begriff Antenne stellvertretend für Systemkomponenten steht, die Einfluss auf die Signalqualität der ausgetauschten RFID-Signale nehmen, und insbesondere die Verbindungsleitung 22 einbeziehen kann. In einer einfachen Ausführungsform ist die angeschlossene Antenne 12 parametriert, der Benutzer trägt beispielsweise bei der Einrichtung des Systems die verwendeten Komponenten in ein Konfigurationsprogramm ein. Um diesen Aufwand für den Benutzer sowie mögliche Falscheingaben zu vermeiden, erfolgt die Erkennung vorzugsweise automatisch. Dafür kann beispielsweise die Antenne 12 einen Speicher aufweisen, insbesondere in Form eines eigenen RFID-Transponders, in dem ihre eigene Identifikationsinformation abgelegt ist. Die Antenne 12 kann dann drahtgebunden oder drahtlos und besonders vorteilhaft über das ohnehin implementierte RFID-Protokoll identifiziert werden. Eine weitere Variante ist das Anbringen eines optischen Codes, den die RFID-Lesevorrichtung 10 mit einem entsprechenden, nicht gezeigten internen oder extern angeschlossenen optischen Codeleser erfasst.

In einem Schritt S2 bestimmt die RFID-Lesevorrichtung 10 mindestens einen Signalparameter der gesendeten und/oder empfangenen RFID-Signale. Damit wird dann im Anschluss im Schritt S3 der RFID-Signalaustausch bewertet, der mit der angeschlossenen Antenne 12 möglich ist. Alternativ oder zusätzlich erfolgt die Bewertung theoretisch anhand von Eigenschaften der angeschlossenen Antenne beispielsweise aus deren Datenblatt. Die angeschlossene Antenne 12 wird in der Regel eine Doppelrolle als eine der alternativen Antennen 26 der Antennenliste 24 haben, so dass derartige Informationen verfügbar sind. Ansonsten können entsprechende Antennenparameter in der Antenne 12 selbst gespeichert oder anhand deren Identifikationsinformation aus einer Datenbank abgefragt werden. Die Erfassung des mindestens einen Signalparameters des Schritts S2 kann während des Betriebs ebenso wie in einem speziellen Einrichtungs- oder Wartungsmodus erfolgen. Es können RFID-Signale eines wiederholten Signalaustauschs mit demselben RFID-Transponder 20 und/oder mit mehreren RFID-Transpondern 20 bewertet werden, um durch größere Statistik zu einer verlässlicheren Bewertung zu kommen. Einige denkbare Signalparameter für die Bewertung sind die Signalstärke oder der Signalpegel, die Phasenlage des Antwortsignals oder eine Frequenzverschiebung.

In einem Schritt S3 werden die im Schritt S2 erfassten Signalparameter ausgewertet, ob sich hieran ein Fehlerbild festmachen lässt oder eine gestellte Anforderung nicht erfüllt ist. Beispielsweise sind für Signalparameter Mindest- oder Höchstwerte vorgegeben, oder es wird geprüft, ob Signalparameter einer großen Schwankung unterliegen. Es ist denkbar, dass Anforderungen in einer Form gestellt sind, aus denen konkrete Schwellenwerte oder ähnliche Bewertungskriterien erst abgeleitet werden, beispielsweise eine erforderliche Signalstärke aus einer spezifizierten Reichweite.

Finden sich keine Auffälligkeiten oder Fehler, so ist ein Austausch der Antenne 12 nicht erforderlich, und das Verfahren ist beendet, beziehungsweise es kann sofort oder zu einem späteren Zeitpunkt im Schritt S1 wiederholt werden. Im Falle von Auffälligkeiten oder Fehlern wird das Verfahren in einem Schritt S4 fortgesetzt. Es ist auch denkbar, in jedem Fall im Schritt S4 fortzufahren, um auch dann eine alternative Antenne 26 vorzuschlagen, wenn momentan alle Anforderungen erfüllt sind, und den Benutzer entscheiden zu lassen, ob dennoch beispielsweise zur Schaffung von Funktionsreserven die Antenne 12 gewechselt werden soll.

In dem Schritt S4 wird geprüft, welche der alternativen Antennen 26 gemäß den dazu mit der Antennenliste 24 verfügbaren Antenneninformationen die in dem Schritt S3 gefundene Auffälligkeit oder den Fehler bereinigen würde. Es kann auch ein reiner Verbesserungsvorschlag sein, der beispielsweise eine höhere Lesereichweite ermöglichen würde. Vorzugsweise wird dabei darauf geachtet, dass es nicht nur technische Rahmenbedingungen gibt. RFID-Systeme unterliegen normierten Grenzwerten insbesondere in Bezug auf die maximal abgestrahlte Leistung, die sich typischerweise von Land zu Land unterscheiden. Eine empfohlene alternative Antenne 26 beachtet vorzugsweise solche länderspezifischen Grenzwerte und schöpft sie noch bevorzugter aus.

In einem Schritt S5 wird die im Schritt S4 identifizierte alternative Antenne 26 dem Benutzer angezeigt, sei es auf einer Anzeige der RFID-Lesevorrichtung 10 selbst oder einer daran direkt oder auch über ein Netzwerk angeschlossenen Anzeige. Dies wird vorzugsweise von Zusatzinformationen begleitet, etwa dem Anlass der Empfehlung, also dem so bereinigten Fehlerbild oder den durch einen Antennentausch erreichten Verbesserungen, oder einer Montageanleitung beziehungsweise einer Bezugsmöglichkeit für die empfohlene alternative Antenne 26. Der Austausch selbst erfolgt durch den Benutzer, woraufhin das Verfahren sofort oder zu einem späteren Zeitpunkt im Schritt S1 wiederholt wird. Es ist denkbar, dass mehrere Antennen 12 angeschlossen sind oder werden und/oder die angeschlossenen Antennen 12 variable, ansteuerbare Eigenschaften aufweisen. Damit sind auch insbesondere ergänzende automatische Anpassungen denkbar, etwa die Umschaltung einer Polarisation.

Figur 5 zeigt ein Ablaufdiagramm ähnlich Figur 4 nun mit konkreteren Bedingungen und Empfehlungen eines Ausführungsbeispiels. Die Schritte S11 bis S15 sind dabei weitgehend analog zu den Schritten S1 bis S5, und es werden nur die beispielhaften Konkretisierungen erläutert.

Nachdem im Schritt S11 die angeschlossene Antenne 12 identifiziert wurde, wird im Schritt S12 als Signalparameter speziell die Signalstärke (Signalpegel, RSSI) gemessen. Als Fehler oder Auffälligkeit im Schritt S13 wird ein zu schwaches Signal aufgefasst, die beispielsweise unterhalb einer für die RFID-Lesevorrichtung 10 festgelegten oder parametrierten Signalstärkeschwelle liegt. Eine weitere mögliche Auffälligkeit ist eine stark schwankende Signalstärke, die wiederum an für die RFID-Lesevorrichtung 10 festgelegten oder parametrierten Schwellen oder Verhältnissen festgemacht werden kann.

Ist im Schritt S13 eine Auffälligkeit erkannt, so erfolgt im Schritt S14 die Suche nach einer alternativen Antenne 26, die die Auffälligkeit behebt. Für den Ausgleich einer zu geringen Signalstärke kann beispielsweise eine Verbindungleitung 22 mit geringeren Verlusten und/oder eine alternative Antenne 26 mit höherem Antennengewinn (Gain) empfohlen werden, etwa einer alternativen Antenne 26 mit 6dBi anstelle einer angeschlossenen Antenne 12 mit 3dBi. Eine stark schwankende Signalstärke deutet auf RFID-Transponder 20 in unterschiedlichen Entfernungen und/oder Ausrichtungen hin. Auf nur hin und wieder schwache Signale aufgrund der Entfernung kann ebenso reagiert werden wie soeben für insgesamt zu schwache Signale erläutert. Unterschiedliche Ausrichtungen können beispielsweise durch eine alternative Antenne 26 mit einem geringeren Achsenverhältnis beziehungsweise einer zirkularen statt einer linearen Polarisation kompensiert werden.

Die identifizierte alternative Antenne 26 wird dem Benutzer in einem Schritt S15 angezeigt, der dann die RFID-Lesevorrichtung durch Austausch der angeschlossenen Antenne 12 gegen die identifizierte alternative Antenne 26 verbessern kann.

## Patentansprüche

1. Verfahren zum Prüfen und Anpassen einer RFID-Lesevorrichtung (10), die eine interne Antenne (12) und/oder eine über eine Verbindungsleitung (22) angeschlossene externe Antenne (12) aufweist, wobei über die Antenne (12) mindestens ein RFID-Signal zwischen der RFID-Lesevorrichtung (10) und mindestens einem RFID-Transponder (20) übertragen wird und mindestens ein Signalparameter des übertragenen RFID-Signals gemessen wird, und wobei die RFID-Lesevorrichtung (10) erkennt, welche Antenne (12) angeschlossen ist, wobei die RFID-Lesevorrichtung (10) die angeschlossene Antenne (12) und/oder Verbindungsleitung (22) mit an die RFID-Lesevorrichtung (10) anschließbaren alternativen Antennen (26) und/oder Verbindungsleitungen einer Antennenliste (24) vergleicht, um eine Antenne (26) und/oder Verbindungsleitung zu identifizieren, die die Übertragung des RFID-Signals verbessert, wobei der gemessene Signalparameter als Basis für den Vergleich mit alternativen Antennen und möglichen Verbesserungen dient, und die identifizierte Antenne (26) und/oder Verbindungsleitung einem Benutzer der RFID-Lesevorrichtung (10) angezeigt wird.

2. Verfahren nach Anspruch 1,
wobei die Antennenliste (24) Einträge für eine Antenne (26) oder Verbindungsleitung mit zugehörigen Antennenparametern oder Übertragungsparametern aufweist.

3. Verfahren nach Anspruch 3, wobei die Antennenparameter oder Übertragungsparameter eine Dämpfung, einen Antennengewinn, ein Achsenverhältnis oder einen Frequenzbereich aufweisen.

4. Verfahren nach einem der vorhergehenden Ansprüche,
wobei der gemessene Signalparameter mit einer Mindestanforderung verglichen wird.

5. Verfahren nach Anspruch 4,
wobei die identifizierte Antenne (26) und/oder Verbindungsleitung angezeigt wird, wenn der gemessene Signalparameter die Mindestanforderung nicht erfüllt.

6. Verfahren nach einem der vorhergehenden Ansprüche,
wobei der gemessene Signalparameter eine Signalstärke aufweist.

7. Verfahren nach Anspruch 6,
wobei die identifizierte Antenne (26) einen anderen Antennengewinn und/oder die Verbindungsleitung eine andere Dämpfung aufweist.

8. Verfahren nach einem der vorhergehenden Ansprüche,
wobei die identifizierte Antenne (26) und/oder Verbindungsleitung zu einer gemäß rechtlicher Vorgaben zulässigen Signalstärke führt.

9. Verfahren nach einem der Ansprüche 6 bis 8,
wobei das Zeitverhalten der Signalstärke auf Schwankungen geprüft wird.

10. Verfahren nach Anspruch 9,
wobei im Falle von Schwankungen über ein vorgegebenes Mindestmaß hinaus die identifizierte Antenne (26) ein anderes Achsenverhältnis oder eine andere Polarisation aufweist.

11. Verfahren nach einem der vorhergehenden Ansprüche,
wobei der gemessene Signalparameter eine Frequenz oder eine Phase des RFID-Signals aufweist.

12. Verfahren nach einem der vorhergehenden Ansprüche,
wobei die angeschlossene Antenne (12) durch Erkennen eines optischen Codes der Antenne (12) oder Auslesen eines Speichers der Antenne (12) automatisch erkannt wird.

13. Verfahren nach einem der vorhergehenden Ansprüche,
wobei die Antennenliste (24) in der RFID-Lesevorrichtung (10) gespeichert ist und/oder wobei die RFID-Lesevorrichtung (10) Zugriff auf eine externe Datenbank mit der Antennenliste (24) hat.

14. Verfahren nach einem der vorhergehenden Ansprüche,
wobei die identifizierte Antenne (26) und/oder Verbindungsleitung auf einer Anzeige der RFID-Lesevorrichtung (10) oder einem daran angeschlossenen Gerät angezeigt wird.

15. RFID-Lesevorrichtung (10), die eine interne Antenne (12) und/oder eine über eine Verbindungsleitung (22) angeschlossene externe Antenne (12), einen mit der Antenne (12) verbundenen Transceiver (14) zum Übertragen mindestens eines RFID-Signals zwischen der RFID-Lesevorrichtung (10) und mindestens einem RFID-Transponder (20) sowie eine mit dem Transceiver (14) verbundene Steuer- und Auswertungseinheit (16) aufweist, in der ein Verfahren zum Prüfen und Anpassen der RFID-Lesevorrichtung (10) nach einem der vorhergehenden Ansprüche implementiert ist.

## Claims

1. A method of testing and adjusting an RFID reading device (10) that has an internal antenna (12) and/or an external antenna (12) connected via a connection line (22), wherein at least one RFID signal is transmitted between the RFID reading device (10min) and the at least one RFID transponder (20) over the antenna (12) and at least one signal parameter of the transmitted RFID signal is measured, and wherein the RFID reading device (10) recognizes which antenna (12) is connected,
wherein the RFID reading device (10) compares the connected antenna (12) and/or the connection line (22) with alternative antennas (20) connectable to the RFID reading device (10) and/or with connection lines of an antenna list (24) to identify an antenna (26) and/or connection line that improves the transmission of the RFID signal; wherein the measured signal parameter serves as a basis for the comparison with alternative antennas and possible improvements and the identified antenna (26) and/or connection line is displayed to a user of the RFID reading device (10).

2. A method in accordance with claim 1,
wherein the antenna list (24) comprises entries for an antenna (26) or connection line having associated antenna parameters or transmission parameters.

3. A method in accordance with claim 3,
wherein the antenna parameters or transmission parameters have a damping, an antenna gain, an axial ratio, or a frequency range.

4. A method in accordance with any one of the preceding claims,
wherein the measured signal parameter is compared with a minimum demand.

5. A method in accordance with claim 4,
wherein the identified antenna (26) and/or connection line is displayed when the measured signal parameter does not satisfy the minimum demand.

6. A method in accordance with any one of the preceding claims, wherein the measured signal parameter has a signal strength.

7. A method in accordance with claim 6,
wherein the identified antenna (26) has a different antenna gain and/or the connection line has a different damping.

8. A method in accordance with any one of the preceding claims,
wherein the identified antenna (26) and/or connection line results in a signal strength that is permitted in accordance with legal specifications.

9. A method in accordance with any one of the claims 6 to 8,
wherein the time behavior of the signal strength is checked for fluctuations.

10. A method in accordance with claim 9,
wherein the identified antenna (26) has a different axial ratio or a different polarization in the case of fluctuations beyond a specified minimum degree.

11. A method in accordance with any one of the preceding claims,
wherein the measured signal parameter has a frequency or a phase of the RFID signal.

12. A method in accordance with any one of the preceding claims,
wherein the connected antenna (12) is automatically recognized, by recognition of an optical code of the antenna (12) or reading a memory of the antenna (12).

13. A method in accordance with any one of the preceding claims,
wherein the antenna list (24) is stored in the RFID reading device (10); and/or
wherein the RFID reading device (10) has access to an external database having the antenna list (24).

14. A method in accordance with any one of the preceding claims,
wherein the identified antenna (26) and/or connection line is displayed on a display of the RFID reading device (10) or on a device connected thereto.

15. An RFID reading device (10) having an internal antenna (12) or an external antenna (12) connected via a connection line (22), a transceiver (14) connected to the antenna (12) to transmit at least one RFID signal between the RFID reading device (10) and at least one RFID transponder (20), and a control and evaluation unit (16) that is connected to the transceiver (14) and in which a method of testing and adjusting the RFID reading device (10) in accordance with any one of the preceding claims, is implemented.

## Revendications

1. Procédé de contrôle et d'adaptation d'un dispositif de lecture RFID (10) comprenant une antenne interne (12) et/ou une antenne externe (12) raccordée par une ligne de connexion (22),
dans lequel
au moins un signal RFID est transmis par l'intermédiaire de l'antenne (12) entre le dispositif de lecture RFID (10) et au moins un transpondeur RFID (20), et au moins un paramètre du signal RFID transmis est mesuré, et
le dispositif de lecture RFID (10) reconnaît quelle antenne (12) est raccordée,
le dispositif de lecture RFID (10) compare l'antenne raccordée (12) et/ou la ligne de connexion (22) à des antennes (26) et/ou des lignes de connexion alternatives d'une liste d'antennes (24), qui peuvent être raccordées au dispositif de lecture RFID (10), afin d'identifier une antenne (26) et/ou une ligne de connexion qui améliore la transmission du signal RFID,
le paramètre de signal mesuré sert de base pour la comparaison à des antennes alternatives et à des améliorations possibles, et l'antenne (26) et/ou la ligne de connexion identifiée est indiquée à un utilisateur du dispositif de lecture RFID (10).

2. Procédé selon la revendication 1,
dans lequel la liste d'antennes (24) comprend des entrées pour une antenne (26) ou une ligne de connexion avec des paramètres d'antenne ou des paramètres de transmission associés.

3. Procédé selon la revendication 2,
dans lequel les paramètres d'antenne ou les paramètres de transmission associés comprennent une atténuation, un gain d'antenne, un rapport d'axes ou une plage de fréquences.

4. Procédé selon l'une des revendications précédentes,
dans lequel le paramètre de signal mesuré est comparé à une exigence minimale.

5. Procédé selon la revendication 4,
dans lequel l'antenne (26) et/ou la ligne de connexion identifiée est indiquée si le paramètre de signal mesuré ne satisfait pas à l'exigence minimale.

6. Procédé selon l'une des revendications précédentes,
dans lequel le paramètre de signal mesuré comprend une intensité de signal.

7. Procédé selon la revendication 6,
dans lequel l'antenne identifiée (26) présente un autre gain d'antenne et/ou la ligne de connexion présente une autre atténuation.

8. Procédé selon l'une des revendications précédentes,
dans lequel l'antenne (26) et/ou la ligne de connexion identifiée conduit à une intensité de signal admissible selon les prescriptions légales.

9. Procédé selon l'une des revendications 6 à 8,
dans lequel le comportement temporel de l'intensité du signal est contrôlé quant à des fluctuations.

10. Procédé selon la revendication 9,
dans lequel, dans le cas de fluctuations dépassant une valeur minimale prédéfinie, l'antenne identifiée (26) présente un autre rapport d'axes ou une autre polarisation.

11. Procédé selon l'une des revendications précédentes,
dans lequel le paramètre de signal mesuré comprend une fréquence ou une phase du signal RFID.

12. Procédé selon l'une des revendications précédentes,
dans lequel l'antenne raccordée (12) est reconnue automatiquement par reconnaissance d'un code optique de l'antenne (12) ou par lecture d'une mémoire de l'antenne (12).

13. Procédé selon l'une des revendications précédentes,
dans lequel la liste d'antennes (24) est stockée dans le dispositif de lecture RFID (10), et/ou le dispositif de lecture RFID (10) a accès à une base de données externe contenant la liste d'antennes (24).

14. Procédé selon l'une des revendications précédentes,
dans lequel l'antenne (26) et/ou la ligne de connexion identifiée est indiquée sur un écran d'affichage du dispositif de lecture RFID (10) ou sur un appareil raccordé à celui-ci.

15. Dispositif de lecture RFID (10) comprenant une antenne interne (12) et/ou une antenne externe (12) raccordée par une ligne de connexion (22), un émetteur-récepteur (14) relié à l'antenne (12) pour transmettre au moins un signal RFID entre le dispositif de lecture RFID (10) et au moins un transpondeur RFID (20), ainsi qu'une unité de commande et d'évaluation (16) reliée à l'émetteur-récepteur (14),
dans lequel est mis en œuvre un procédé de contrôle et d'adaptation du dispositif de lecture RFID (10) selon l'une des revendications précédentes.
